(19) Europäisches Patentamt
European Patent Office
Office européen des brevets

(11) EP 4 344 116 A2

(12) EUROPEAN PATENT APPLICATION

(43) Date of publication:
27.03.2024 Bulletin 2024/13

(21) Application number: 23193795.4

(22) Date of filing: 29.08.2023

(51) International Patent Classification (IPC):
*H04L 5/00* (2006.01)

(52) Cooperative Patent Classification (CPC):
**H04L 5/0023; H04L 5/0091;** H04L 5/0012;
H04L 5/0053; H04L 5/0094

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 29.08.2022 US 202263401891 P

(71) Applicant: Nokia Technologies Oy
02610 Espoo (FI)

(72) Inventors:
• Hakola, Sami-Jukka
90450 Kempele (FI)
• Koskela, Timo
90670 Oulu (FI)
• Karjalainen, Juha Pekka
88600 Sotkamo (FI)
• Enescu, Mihai
02200 Espoo (FI)

(74) Representative: Nokia EPO representatives
Nokia Technologies Oy
Karakaari 7
02610 Espoo (FI)

(54) **DYNAMIC UPLINK TRANSMISSION SCHEME INDICATION FOR MULTI-PANEL USER EQUIPMENT**

(57) Systems, methods, apparatuses, and computer program products for dynamic uplink transmission scheme indication for multi-panel user equipment are provided. For example, a method can include indicating to a network a capability of an apparatus to perform simultaneous transmission. The method can also include receiving a configuration of two sounding reference signal resource sets for codebook based physical uplink shared channel and a three-bit sounding reference signal resource set indicator.

FIG. 2

EP 4 344 116 A2

## Description

FIELD:

Some example embodiments may generally relate to communications including mobile or wireless telecommunication systems, such as Long Term Evolution (LTE) or fifth generation (5G) radio access technology or new radio (NR) access technology, or other communications systems including subsequent generations of the same or similar standards. For example, certain example embodiments may generally relate to dynamic uplink transmission scheme indication for multi-panel user equipment.

BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on 5G new radio (NR), but a 5G (or NG) network can also build on the E-UTRA radio. From release 18 (Rel-18) onward, 5G is referred to as 5G advanced. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio. 6G is currently under development and may replace and/or complement 5G and 5G advanced.

SUMMARY:

An embodiment may be directed to an apparatus. The apparatus can include at least one processor and at least memory storing instructions. The instructions, when executed by the at least one processor, can cause the apparatus at least to indicate to a network a capability of the apparatus to support simultaneous multi-panel transmission in an uplink control channel to the network. The instructions, when executed by the at least one processor, can also cause the apparatus at least to determine a transmission scheme to be applied to the simultaneous multi-panel transmission in the uplink control channel. The instructions, when executed by the at least one processor, can further cause the apparatus at least to determine time-frequency resources for the simultaneous multi-panel transmission in the uplink control channel based on the determined transmission scheme. The instructions, when executed by the at least one processor, can additionally cause the apparatus at least to perform the simultaneous multi-panel transmission in the uplink control channel using the time-frequency resources.

An embodiment may be directed to an apparatus. The apparatus can include at least one processor and at least memory storing instructions. The instructions, when executed by the at least one processor, can cause the apparatus at least to perform receiving a message from a network regarding an uplink resource. The message can include an explicit indication regarding frequency domain multiplexing. The instructions, when executed by the at least one processor, can also cause the apparatus at least to perform determining whether frequency domain multiplexing is used from the explicit indication. The instructions, when executed by the at least one processor, can further cause the apparatus at least to perform communicating on the uplink resource based on the determination.

An embodiment may be directed to an apparatus. The apparatus can include at least one processor and at least memory storing instructions. The instructions, when executed by the at least one processor, can cause the apparatus at least to perform providing a message to a user equipment regarding an uplink resource. The message can include an explicit indication regarding frequency domain multiplexing. The instructions, when executed by the at least one processor, can also cause the apparatus at least to perform receiving communication from the user equipment on the uplink resource based on the explicit indication.

An embodiment may be directed to a method. The method can include indicating to a network a capability of a user equipment to support simultaneous multi-panel transmission in an uplink control channel to the network. The method can also include determining a transmission scheme to be applied to the simultaneous multi-panel transmission in the uplink control channel. The method can further include determining time-frequency resources for the simultaneous multi-panel transmission in the uplink control channel based on the determined transmission scheme. The method can additionally include performing the simultaneous multi-panel transmission in the uplink control channel using the time-frequency resources.

An embodiment may be directed to a method. The method can include receiving, by a user equipment, a message from a network regarding an uplink resource, wherein the message comprises an explicit indication regarding frequency domain multiplexing. The method can also include determining whether frequency domain multiplexing is used from the explicit indication . The method can further include communicating, by the user equipment, on the uplink resource based on the determination.

An embodiment may be directed to a method. The method can include providing a message to a user equipment regarding an uplink resource. The message can include an explicit indication regarding frequency domain multiplexing. The method can also include receiving communication from the user equipment on the uplink resource based on the explicit indication.

An embodiment can be directed to an apparatus. The apparatus can include means for indicating to a network a capability of the apparatus to support simultaneous multi-panel transmission in an uplink control channel to the network. The apparatus can also include means for determining a transmission scheme to be applied to the simultaneous multi-panel transmission in the uplink control channel. The apparatus can further include means for determining time-frequency resources for the simultaneous multi-panel transmission in the uplink control channel based on the determined transmission scheme. The apparatus can additionally include means for performing the simultaneous multi-panel transmission in the uplink control channel using the time-frequency resources.

An embodiment can be directed to an apparatus. The apparatus can include means for receiving a message from a network regarding an uplink resource. The message can include an explicit indication regarding frequency domain multiplexing. The apparatus can also include means for determining whether frequency domain multiplexing is used from the explicit indication. The apparatus can further include means for communicating on the uplink resource based on the determination.

An embodiment can be directed to an apparatus. The apparatus can include means for providing a message to a user equipment regarding an uplink resource. The message can include an explicit indication regarding frequency domain multiplexing. The apparatus can also include means for receiving communication from the user equipment on the uplink resource based on the explicit indication.

BRIEF DESCRIPTION OF THE DRAWINGS:

For proper understanding of example embodiments, reference should be made to the accompanying drawings, wherein:

FIG. 1 illustrates a configuration of various physical uplink control channel formats;
FIG. 2 illustrates a signal flow diagram of a method according to certain embodiments.; and

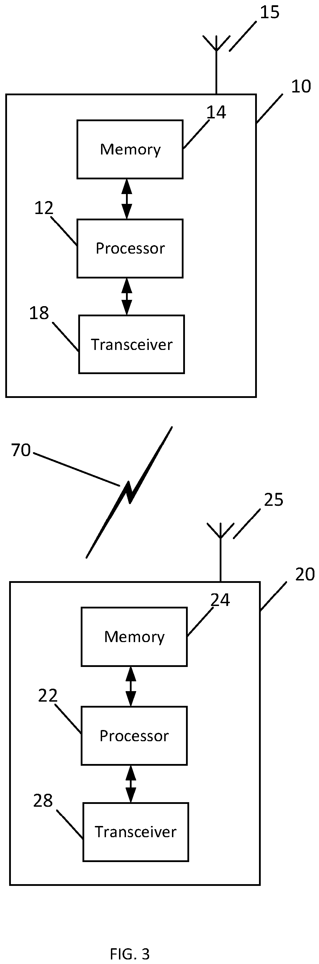

FIG. 3 illustrates an example block diagram of a system, according to an embodiment.

DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for providing dynamic uplink transmission scheme indication for multi-panel user equipment, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Certain embodiments may have various aspects and features. These aspects and features may be applied alone or in any desired combination with one another. Other features, procedures, and elements may also be applied in combination with some or all of the aspects and features disclosed herein.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Certain embodiments relate to third generation partnership project (3GPP) new radio (NR) physical layer development. More specifically, certain embodiments relate to facilitating simultaneous multi-panel physical up-

**EP 4 344 116 A2**

link control channel (PUCCH) transmission. For example, certain embodiments may relate to multiple-input/multiple-output (MIMO) in which there is facilitation of simultaneous multi-panel UL transmission for higher UL throughput/reliability, focusing on FR2 and multi-TRP, assuming up to two transmission/reception points (TRPs) and up to two panels.

For example, certain embodiments relate to facilitating simultaneous uplink (UL) transmission for multi-panel user equipment (MP-UEs). Certain embodiments may facilitate simultaneous UL transmission for MP-UEs for higher UL throughput and reliability. Certain embodiments may be applicable to frequency range 2 (FR2) and multi-TRP cases, assuming up to two TRPs and up two panels. Moreover, certain embodiments may relate to multi-TRP time division multiplex (TDM) physical uplink shared channel (PUSCH) repetition.

There may be an UL precoding indication for PUSCH, where no new codebook is introduced for multi-panel simultaneous transmission. The total number of layers may be up to four across all panels and total number of codewords may be up to two across all panels, considering single downlink control information (DCI) and multi-DCI based multi-TRP operation. There can be an UL beam indication for PUCCH/PUSCH, where unified transmission configuration indicator (TCI) framework extension in objective assumed, considering single DCI and multi-DCI based multi-TRP operation. For the case of multi-DCI based multi-TRP operation, only PUSCH+PUSCH or PUCCH+PUCCH may be transmitted across two panels in a same component carrier (CC).

Multi-TRP TDM PUCCH repetition operation can include single-DCI operation in FR2 and frequency range 1. For single-DCI multi-TRP (M-TRP) TDM PUCCH repetition operation in FR2, there may be the use of one PUCCH resource. There may be activation of two spatial relation information for a PUCCH resource via medium access control (MAC) control element (CE). Either cyclical mapping or sequential mapping can be configured via radio resource control (RRC) for mapping the two spatial relation info to PUCCH repetitions.

For single-DCI M-TRP TDM PUCCH repetition operation in FR1, there can again be the use of one PUCCH resource. Moreover, the can be the activation of two power control parameters sets for a PUCCH resource via a MAC CE. The two power control parameter sets can each include target received power (P0), closed-loop index, and pathloss (PL) reference signal (RS). Either cyclical mapping or sequential mapping can be configured via RRC for mapping the two power-control parameter sets to PUCCH repetitions.

When a PUCCH resource used for repetitions of a PUCCH transmission by a user equipment (UE) includes first and second spatial settings, or first and second sets of power control parameters, the UE can use the first and second spatial settings, or the first and second sets of power control parameters, for first and second repetitions of the PUCCH transmission respectively when a repetition number of PUCCH, $N_{\text{PUCCH}}^{\text{repeat}}$, is two. The UE can alternate between the first and second spatial settings, or between the first and second sets of power control parameters, respectively, per a switch number of

PUCCH, $N_{\text{PUCCH}}^{\text{switch}}$. The switch number of PUCCH can be 1 when a mapping pattern parameter, *mappingPattern,* indicates cyclic mapping, *cyclicMapping,* but otherwise can be 2.

For single-DCI based STxMP PUCCH transmissions, frequency domain multiplexing (FDM) and single frequency network (SFN) schemes, PUCCH code division multiplexing (CDM) scheme and the scheme of uplink control information (UCI) transmitting in two PUCCH resources may be implemented.

In the single-DCI based STxMP PUCCH transmissions schemes, transmission occasions from different panels may either use the same time and frequency resources, as in SFN and CDM, or the same time and different frequency resources, as in FDM. Certain embodiments relate to how the frequency domain resource allocation and thus also transmission mode, such as FDM or SFN/CDM, can be selected and indicated to the UE.

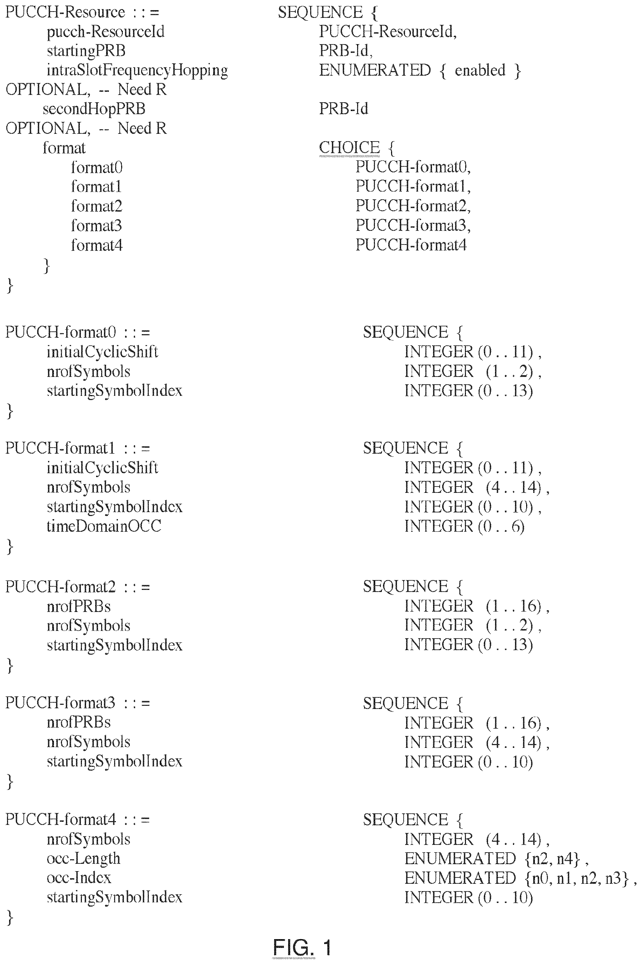

FIG. 1 illustrates a configuration of various physical uplink control channel formats. The configurations shown in FIG. 1 correspond to 3GPP technical specification (TS) 38.331.

In certain embodiments, any triggering/activation/configuration command of a PUCCH resource can have an explicit indication based on which the UE can determine whether FDM is used and how the UE is to interpret the frequency domain allocation.

The explicit indication, in case of periodic PUCCH resource, can be part of PUCCH resource configuration, such as 1-bit information in a PUCCH resource configuration. The explicit information, is in case of semi persistent PUCCH resource, can be part of a MAC-CE activating the PUCCH resource, such as a 1 bit information in a MAC-CE. In case of DCI triggered PUCCH resource, the explicit indication be part of a DCI sent on PDCCH, such as 1-bit information in DCI. Furthermore, there can be a common explicit indication or configuration that both PUSCH and PUCCH are transmitted using FDM or non-FDM manner.

The UE determining whether FDM is used can be based on whether explicit information exists or if a field for the explicit always exists, if the value is 1.

The UE can interpret the frequency domain allocation, if the UE has determined that FDM scheme is applied, according to the PUCCH format.

For PUCCH format 0, 1 or 4, since these formats do not have explicit 'nrofPRBs' field and have 1 RB frequency allocation, the UE can transmit one PUCCH occasion on one panel on the 1 RB frequency resource determined for the resource. The UE can then transmit the second PUCCH occasion on the other panel on the next or previous RB in frequency or on the RB with predefined or configured or determined distance in RBs. In case of frequency hopping, in the second hop the second PUCCH occasion may be the next RB lower or higher in frequency or on the RB with predefined or configured or determined distance in RBs where determining means that the UE determines first RB (lower or higher) that is not an RB some configured PUCCH resource is configured with.

For PUCCH format 2 or 3, the 'nrofPRBs' may always be an even number. The UE can assume that a first half of the 'nrofPRBs' are for the first PUCCH occasion on one panel and the second half of the 'nrofPRBs' for the second PUCCH occasion on the other panel. In one alternative, also with these PUCCH formats the second PUCCH occasion on the other panel can use the next 'nrofPRBs' either lower or higher in frequency while the first PUCCH occasion on the first panel can use the 'nrofPRBs' of the PUCCH resource.

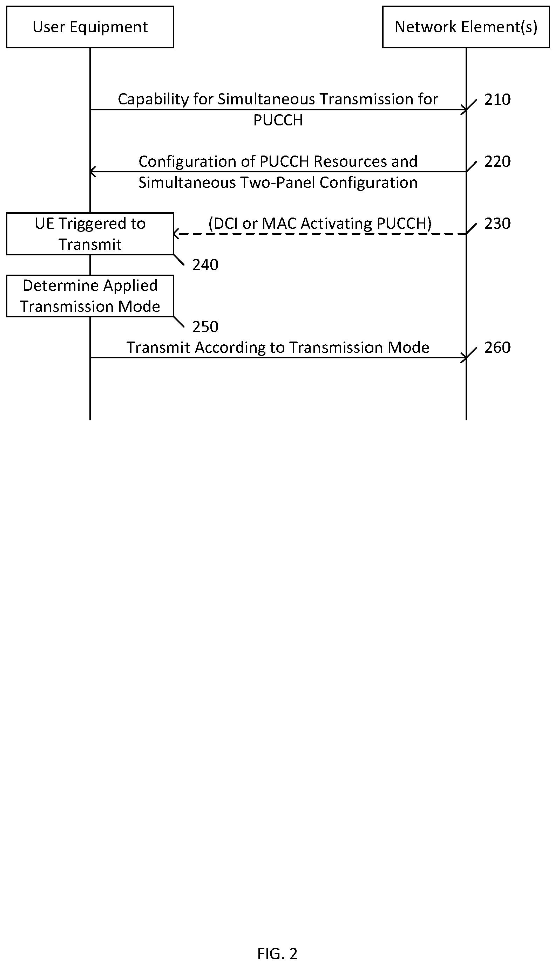

FIG. 2 illustrates a signal flow diagram of a method according to certain embodiments. As shown in FIG. 2, a user equipment can signal the network indicating the UE's capability to perform simultaneous transmission for PUCCH. Although a single box is shown to illustrate the network element or elements that may be involved, different network elements may perform different aspects of the method.

AT 220, the UE may receive configuration of PUCCH resources and also a configuration that the UE is about to transmit PUCCH with two panels simultaneously. Subsequently, at 240, the UE may be triggered to transmit. The UE can be triggered to transmit on a certain PUCCH resource. A triggering command can include an explicit indication. Trigger may be DCI or MAC at 230 activating the PUCCH. As another option, the trigger at 240 may be the time instant on which the UE needs to transmit periodic PUCCH, as the indication may already be provided in the configuration at 220.

At 250, the UE may determine the appropriate transmission mode to be applied. The UE may determine the applied transmission mode based on the following logic. If the UE interprets the frequency domain allocation, the UE may further determine the FDM scheme being applied. The UE determining whether FDM is used can be based on whether explicit information exists or if such information always exists, whether the information is 1 or the like positive, explicit indication.

If the UE has determined that the FDM scheme to be applied is PUCCH format 0, 1, or 4, then because PUCCH formats 0, 1 and 4 do not have explicit 'nrofPRBs' field and have 1 RB frequency allocation, the UE can transmit one PUCCH occasion on one panel on the 1 RB frequency resource determined for the resource. Then, the UE can transmit the second PUCCH occasion on the other panel on the next RB in frequency or on the RB with predefined distance in RBs. In case of frequency hopping, in the second hop the second PUCCH occasion may be the next RB lower in frequency.

If the UE has determined that the FDM scheme to be applied is PUCCH format 2 or 3, then the 'nrofPRBs' may always be an even number. The UE may assume that a first half of the 'nrofPRBs' are for the first PUCCH occasion on one panel and the second half of the 'nrofPRBs' are for the second PUCCH occasion on the other panel. Otherwise, if the UE concludes that frequency domain multiplexing is not being used, the UE can transmit the PUCCH resource using two panels on the same time-frequency resources.

FIG. 5 illustrates an example of a system that includes an apparatus 10, according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), TRP, HAPS, integrated access and backhaul (IAB) node, and/or a WLAN access point, associated with a radio access network, such as a LTE network, 5G or NR. In some example embodiments, apparatus 10 may be gNB or other similar radio node, for instance.

It should be understood that, in some example embodiments, apparatus 10 may include an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a mid-haul interface, referred to as an F1 interface, and the DU(s) may have one or more radio unit (RU) connected with the DU(s) over a front-haul interface. The DU may be a logical node that includes a subset of the gNB functions, depending on the functional split option. It should be noted that one of ordinary skill in the art would understand that apparatus 10 may include components or features not shown in FIG. 5.

As illustrated in the example of FIG. 5, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, or any other processing means, as examples. While a single processor 12 is shown in FIG. 5, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to dynamic uplink transmission scheme indication for multi-panel user equipment.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be include any combination of random access memory (RAM), read only memory (ROM), static storage such as a magnetic or optical disk, hard disk drive (HDD), or any other type of non-transitory machine or computer readable media, or other appropriate storing means. The instructions stored in memory 14 may include program instructions or computer program code that, when executed by processor 12, enable the apparatus 10 to perform tasks as described herein. The term "non-transitory," as used herein, may correspond to a limitation of the medium itself (i.e., tangible, not a signal) as opposed to a limitation on data storage persistency (e.g., RAM vs. ROM).

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15, or may include any other appropriate transceiving means. The radio interfaces may correspond to a plurality of radio access technologies including one or more of global system for mobile communications (GSM), narrow band Internet of Things (NB-IoT), LTE, 5G, WLAN, Bluetooth (BT), Bluetooth Low Energy (BT-LE), near-field communication (NFC), radio frequency identifier (RFID), ultrawideband (UWB), Multe-Fire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (via an uplink, for example).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device), or an input/output means.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry/means or control circuitry/means. In addition, in some embodiments, transceiver 18 may be included in or may form a part of transceiver circuitry/means.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be or may be a part of a network element or RAN node, such as a base station, access point, Node B, eNB, gNB, TRP, HAPS, IAB node, relay node, WLAN access point, satellite, or the like. In one example embodiment, apparatus 10 may be a gNB or other radio node, or may be a CU and/or DU of a gNB. According to certain embodiments, apparatus 10 may be controlled by memory 14 and processor 12 to perform the functions associated with any of the embodiments described herein. For example, in some embodiments, apparatus 10 may be configured to perform one or more of the processes depicted in any of the flow charts or signaling diagrams described herein, such as those illustrated in FIGs. 1-2, or any other method described herein. In some embodiments, as discussed herein, apparatus 10 may be configured to perform a procedure relating to providing dynamic uplink transmission scheme indication for multi-panel user equipment, for example.

FIG. 5 further illustrates an example of an apparatus 20, according to an embodiment. In an embodiment, apparatus 20 may be a node or element in a communications network or associated with such a network, such as a UE, communication node, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in FIG. 5.

As illustrated in the example of FIG. 5, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 5, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can include any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDM symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, SL UE, relay UE, mobile device, mobile station, ME, IoT device and/or NB-IoT device, or the like, for example. According to certain embodiments, apparatus 20 may be controlled by memory 24 and processor 22 to perform the functions associated with any of the embodiments described herein, such as one or more of the operations illustrated in, or described with respect to, FIGs. 1-2, or any other method described herein. For example, in an embodiment, apparatus 20 may be controlled to perform a process relating to providing dynamic uplink transmission scheme indication for multi-panel user equipment, as described in detail elsewhere herein.

In some embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of any of the operations discussed herein.

In view of the foregoing, certain example embodiments provide several technological improvements, enhancements, and/or advantages over existing technological processes and constitute an improvement at least to the technological field of wireless network control and/or management. Certain embodiments may have various benefits and/or advantages. For example, certain embodiments may provide support for dynamic transmission mode switching/indication without significantly increasing overhead and complexity. Moreover, certain embodiments may provide support for dynamic transmission mode switching/indication with low overhead and low additional new complexity for simultaneous PUCCH transmission using two panels.

In some example embodiments, the functionality of any of the methods, processes, signaling diagrams, algorithms or flow charts described herein may be implemented by software and/or computer program code or portions of code stored in memory or other computer readable or tangible media, and may be executed by a processor.

In some example embodiments, an apparatus may include or be associated with at least one software application, module, unit or entity configured as arithmetic operation(s), or as a program or portions of programs (including an added or updated software routine), which may be executed by at least one operation processor or controller. Programs, also called program products or computer programs, including software routines, applets and macros, may be stored in any apparatus-readable data storage medium and may include program instructions to perform particular tasks. A computer program product may include one or more computer-executable components which, when the program is run, are configured to carry out some example embodiments. The one or more computer-executable components may be at least one software code or portions of code. Modifications and configurations required for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality of example embodiments may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality of example embodiments may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein may apply to both singular and plural implementations, regardless of whether singular or plural language is used in connection with describing certain embodiments. For example, an embodiment that describes operations of a single network node may also apply to example embodiments that include multiple instances of the network node, and vice versa.

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of example embodiments.

PARTIAL GLOSSARY:

| | |
|---|---|
| DCI | Downlink Control Information |
| DMRS | Demodulation Reference Signal |
| FDM | Frequency Domain Multiplexing |
| gNB | 5G Node B |
| PUSCH | Physical Uplink Shared Channel |
| SDM | Spatial Domain Multiplexing |
| SFN | Single Frequency Network |
| SRS | Sounding Reference Signal |
| UE | User Equipment |

**Claims**

**1.** An apparatus, comprising:

means for indicating to a network a capability of the apparatus to support simultaneous multi-panel transmission in an uplink control channel to the network;
means for determining a transmission scheme to be applied to the simultaneous multi-panel transmission in the uplink control channel;
means for determining time-frequency resources for the simultaneous multi-panel transmission in the uplink control channel based on the determined transmission scheme; and
means for performing the simultaneous multi-panel transmission in the uplink control channel using the time-frequency resources.

**2.** The apparatus of claim 1, further comprising:

means for receiving a configuration of the uplink control channel; and
means for receiving information indicating that the simultaneous multi-panel transmission in the uplink control channel is performed via two simultaneous uplink transmissions from the apparatus.

**3.** The apparatus of claim 2, further comprising:
means for determining the transmission scheme based on an indication that frequency domain multiplexing is applied to the simultaneous multi-panel transmission in the uplink control channel.

**4.** The apparatus of claim 3, further comprising:
means for, applying the two simultaneous uplink transmissions on same time-frequency resources for the simultaneous multi-panel transmission in the uplink control channel, when the frequency domain multiplexing is not applied to the simultaneous multi-panel transmission in the uplink control channel.

**5.** The apparatus of claim 3, further comprising:
means for, determining the time-frequency resources for the two simultaneous uplink transmissions based on format of the uplink control channel for the simultaneous multi-panel transmission in the uplink control channel, when the frequency domain multiplexing is applied to the simultaneous multi-panel transmission in the uplink control channel.

**6.** The apparatus of claim 5, further comprising:

means for applying one of the two simultaneous uplink transmissions on one resource block frequency resource indicated in the configuration of the uplink control channel, and
means for applying the other one of the two simultaneous uplink transmissions on a next resource block in frequency or on a resource block with a predefined distance in resource blocks,

when the uplink control channel is in physical uplink control channel formats 0, 1, or 4.

7. The apparatus of claim 5, wherein in case of frequency hopping, comprising a first hop occasion and a second hop occasion, on the uplink control channel, the second hop occasion is the next resource block lower or higher in frequency.

8. The apparatus of claim 5, further comprising:

means for applying one of the two simultaneous uplink transmissions on first half of frequency resource indicated in the configuration of the uplink control channel, and
means for applying the other one of the two simultaneous uplink transmissions on second half of frequency resource indicated in the configuration of the uplink control channel,
when the uplink control channel is in physical uplink control channel formats 2 or 3.

9. An apparatus, comprising:

means for receiving a message from a network regarding an uplink resource, wherein the message comprises an explicit indication regarding frequency domain multiplexing;
means for determining whether frequency domain multiplexing is used from the explicit indication; and
means for communicating on the uplink resource based on the determination.

10. The apparatus of claim 9, wherein the message comprises at least one of a triggering of the uplink resource, an activation of the uplink resource, or a configuration command for the uplink resource.

11. The apparatus of claim 9, wherein the explicit indication is provided as one bit of a physical uplink control channel resource configuration.

12. The apparatus of claim 11, wherein the physical uplink control channel resource configuration configures a periodic physical uplink control channel resource.

13. The apparatus of claim 9, wherein the explicit indication is provided as one bit of a control element of a medium access control message.

14. The apparatus of claim 9, wherein the determining whether frequency domain multiplexing is used comprises interpreting a one-bit flag in the message.

15. The apparatus of claim 9, further comprising:
means for determining an interpretation of a frequency domain allocation based on the explicit indication, wherein the communicating on the uplink resources is further based on the interpretation.

16. The apparatus of claim 15, wherein the determining the interpretation further comprises determining the interpretation according to a format of a physical uplink control channel.

17. The apparatus of claim 15, further comprising:
means for, transmitting on a first occasion in a first resource block frequency allocation on one panel of the apparatus, and transmitting on another panel on a next occasion, when the uplink resource has a configuration without a number of physical resource blocks.

18. The apparatus of claim 17, wherein the transmitting on another panel comprises transmitting on a next resource block in frequency, on a resource block with a predefined distance from the first resource block frequency allocation, or on next resource block lower in frequency.

19. The apparatus of claim 15, wherein the instructions, further comprising:
means for, interpreting, as the interpretation of a frequency domain allocation, a first half of the number of physical resource blocks as corresponding to a first occasion on one panel of the apparatus, and a second half of the number of physical resource blocks as corresponding to a second occasion on another panel of the apparatus, when the uplink resource has a configuration including a number of physical resource blocks.

20. An apparatus, comprising:
means for providing a message to a user equipment regarding an uplink resource, wherein the message comprises an explicit indication regarding frequency domain multiplexing; and
means for receiving communication from the user equipment on the uplink resource based on the explicit indication.

```
PUCCH-Resource : : =                    SEQUENCE {
    pucch-ResourceId                        PUCCH-ResourceId,
    startingPRB                             PRB-Id,
    intraSlotFrequencyHopping               ENUMERATED { enabled }
OPTIONAL, -- Need R
    secondHopPRB                            PRB-Id
OPTIONAL, -- Need R
    format                                  CHOICE {
        format0                                 PUCCH-format0,
        format1                                 PUCCH-format1,
        format2                                 PUCCH-format2,
        format3                                 PUCCH-format3,
        format4                                 PUCCH-format4
    }
}


PUCCH-format0 : : =                     SEQUENCE {
    initialCyclicShift                      INTEGER (0 . . 11),
    nrofSymbols                             INTEGER  (1 . . 2),
    startingSymbolIndex                     INTEGER (0 . . 13)
}

PUCCH-format1 : : =                     SEQUENCE {
    initialCyclicShift                      INTEGER (0 . . 11),
    nrofSymbols                             INTEGER  (4 . . 14),
    startingSymbolIndex                     INTEGER (0 . . 10),
    timeDomainOCC                           INTEGER (0 . . 6)
}

PUCCH-format2 : : =                     SEQUENCE {
    nrofPRBs                                INTEGER  (1 . . 16),
    nrofSymbols                             INTEGER  (1 . . 2),
    startingSymbolIndex                     INTEGER (0 . . 13)
}

PUCCH-format3 : : =                     SEQUENCE {
    nrofPRBs                                INTEGER  (1 . . 16),
    nrofSymbols                             INTEGER  (4 . . 14),
    startingSymbolIndex                     INTEGER (0 . . 10)
}

PUCCH-format4 : : =                     SEQUENCE {
    nrofSymbols                             INTEGER  (4 . . 14),
    occ-Length                              ENUMERATED {n2, n4},
    occ-Index                               ENUMERATED {n0, n1, n2, n3},
    startingSymbolIndex                     INTEGER (0 . . 10)
}
```

FIG. 1

FIG. 2

FIG. 3